**Europäisches Patentamt**

**European Patent Office**

**Office européen des brevets**

(19)

(11) Veröffentlichungsnummer: **0 264 599**
**B1**

(12) # EUROPÄISCHE PATENTSCHRIFT

(45) Veröffentlichungstag der Patentschrift:
13.06.90

(51) Int. Cl.⁵: **B23B 29/03**

(21) Anmeldenummer: 87112978.9

(22) Anmeldetag: 04.09.87

(54) Aufbohrwerkzeug.

(30) Priorität: 06.09.86 DE 3630402

(43) Veröffentlichungstag der Anmeldung:
27.04.88 Patentblatt 88/17

(45) Bekanntmachung des Hinweises auf die Patenterteilung:
13.06.90 Patentblatt 90/24

(84) Benannte Vertragsstaaten:
AT BE CH DE ES FR GB IT LI NL SE

(56) Entgegenhaltungen:
DE-A- 2 556 977
DE-A- 2 902 750
DE-A- 2 935 389
US-A- 2 630 725
US-A- 3 213 716
US-A- 3 922 766

WERKSTATT UND BETRIEB, Band 110, Nr. 9,
September 1977, Seiten 615-618, München; K. FABER
"Kurzbohrer mit Hartmetall-Wendeplatten an Stelle
HSS-Spiralbohrer"

(73) Patentinhaber: MAPAL Fabrik für Präzisionswerkzeuge
Dr. Kress KG, Obere Bahnstrasse 13 Postfach 1520,
D-7080 Aalen(DE)

(72) Die Erfinder haben auf ihre Nennung verzichtet

(74) Vertreter: Gleiss, Alf-Olav, Dipl.-Ing., Patentanwalt
Silberburg Strasse 187, D-7000 Stuttgart 1(DE)

## Beschreibung

Die Erfindung betrifft ein Aufbohrwerkzeug der Gattung des Anspruchs 1.

Ein derartiges Aufbohrwerkzeug ist beispielsweise aus der DE-OS 25 56 977 bekannt. Es weist einen Messerkopf mit mehreren an dessen Umfang jeweils mittels einer Befestigungseinrichtung gegen eine Schulter des Messerkopfes anpreßbare Messerplatten auf, deren Abstand zur Längsachse des Messerkopfes verschieden ist und die in Richtung der Längsachse gegeneinander versetzt sind.

Nachteil dieses Aufbohrwerkzeuges ist es, daß beim Anbohren zur Führung des Werkzeugs eine Bohrbuchse erforderlich ist, um einen Anbohrbereich mit einer brauchbaren Oberfläche der Bohrung zu erhalten, und daß Führungsleisten verwendet werden müssen, um das Werkzeug innerhalb der Bohrung zentrisch zu führen.

Es ist daher Aufgabe der Erfindung, ein einfach aufgebautes Aufbohrwerkzeug zu schaffen, mit dem sich Bohrungen so aufbohren lassen, daß auch im Anbohrbereich eine glatte Innenfläche erzielbar ist.

Diese Aufgabe wird bei einem Aufbohrwerkzeug gemäß Oberbegriff des Anspruchs 1 mit Hilfe der in diesem Anspruch genannten Merkmale gelöst. Besonders vorteilhaft ist es, daß die Messerplatten so ausgebildet und angeordnet sind, daß sich ein weicher Anschnitt ergibt, wobei die im Betrieb auf die Messerplatten wirkenden Kräfte gleich groß sind, so daß eine selbsttätige Zentrierung des Werkzeugs erreicht wird. Auf diese Weise lassen sich Werkzeuge schaffen, bei denen keine Führungsleisten vorgesehen zu werden brauchen. Obwohl die Messerplatten so angeordnet sind, daß die in eine die Längsachse des Messerkopfes schneidende Ebene projizierten Schneidkantenabschnitte stetig ineinander übergehen und damit eine optimale Oberflächenbeschaffenheit der Bohrung erzielt wird, wird durch die runde Messerplatte, die als erste in Eingriff mit der Oberfläche der Bohrung tritt, eine als Spurrille dienende Rinne ausgeschnitten, die zur Führung und zur Stabilisierung des Werkzeugs innerhalb der Bohrung führt.

Bevorzugt wird ein Ausführungsbeispiel, dessen Messerplatten drehbar ausgebildet sind. Dadurch kann die Abnutzung eines Schneidkantenbereichs der Messerplatte leicht ausgeglichen werden.

Vorzugsweise werden drei in gleichem Abstand zueinander am Umfang des Messerkopfes angeordnete Messerplatten verwendet. Dadurch ist bei einfachem Aufbau des Werkzeugs ein optimaler Ausgleich der im Betrieb auftretenden Käfte möglich.

Besonders bevorzugt ist ein Ausführungsbeispiel, bei dem den kreisbogenförmig gebogenen Schneidkanten der Messerplatten kreisbogenförmige Spanstufen zugeordnet sind, wobei die Krümmung der Spanstufen entgegengesetzt ist zur Kümmung der Schneidkante. Der Abstand des wirksamen, mit dem Werkstück in Eingriff stehenden Schneidkantenabschnitts von der spanleitenden und -brechenden Spanstufe kann also durch Drehen der Messerplatte verändert werden. Das Werkzeug kann so leicht an verschiedene Materialien angepaßt werden, da der jeweils optimale Abstand der Schneidkante zur Spanstufe einstellbar ist. Auf diese Weise kann die Spanlänge so gewählt werden, daß das Werkzeug nicht behindert und ein hoher Feinheitsgrad der Bohrungsoberfläche erreicht wird.

Die Erfindung wird im folgenden anhand der ein Ausführungsbeispiel des Aufbohrwerkzeugs darstellenden Figuren näher erläutert. Es zeigen:

Fig. 1 eine Stirnansicht des Messerkopfes und
Fig. 2 einen Ausschnitt aus einem Längsschnitt durch eine mit dem Aufbohrwerkzeug zum Teil aufgebohrte Bohrung mit in die Zeichnungsebene projizierten Messerplatten.

In den Figuren ist ein Aufbohrwerkzeug, insbesondere ein Feinbohrwerkzeug zur Herstellung von Feinbohrungen, dargestellt, das zur Bearbeitung der Innenfläche von Bohrungen, insbesondere zur Bearbeitung der Innenfläche von zylindrischen Bohrungen in Stahlgußwerkstücken geeignet ist.

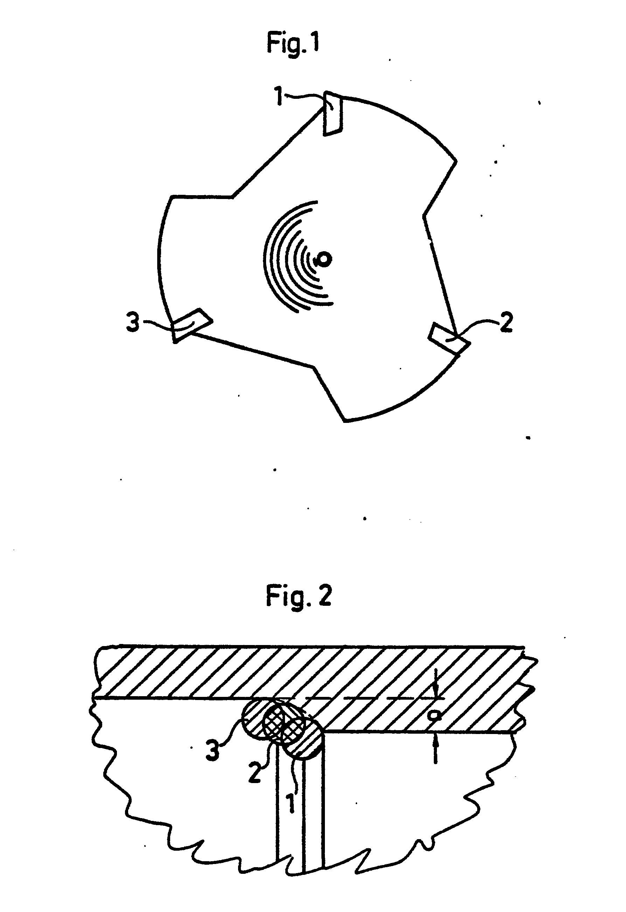

Das Aufbohrwerkzeug weist einen Messerkopf auf, an dessen Umfang drei je um 120° gegeneinander ver setzte Messerplatten 1, 2, 3 angeordnet sind, die von mindestens einer Spannpratze gegen eine Schulter des Messerkopfes gepreßt werden. Die Spannpratzen sind wegen der besseren Übersicht in der Zeichnung nicht dargestellt. Die kreisrunden Messerplatten weisen von der Dreh- bzw. Längsachse des Messerkopfes einen ungleich großen Abstand auf und sind achsial, d.h. in Richtung der Längsachse, geringfügig gegeneinander versetzt, so daß sich bei Projizierung der drei wirksamen, mit dem Werkstück in Eingriff stehenden Schneidkantenabschnitte eine nahezu gleichförmig gekrümmte Umhüllende ergibt. Die beiden vorderen Messerplatten 1 und 2 dienen als Schruppschneiden, während die dritte Messerplatte 3 der Feinbearbeitung des Werkstücks dient. Mit den drei Messerplatten wird ein in Fig. 2 mit a bezeichneter Bereich abgetragen.

## Patentansprüche

1. Feinbohrwerkzeug zur Herstellung von Präzisionsbohrungen, mit einem Messerkopf, an dessen Umfang mehrere jeweils mittels einer Befestigungsvorrichtung gegen eine Schulter des Messerkopfes anpressbare Messerplatten angeordnet sind, deren Abstand zur Längsachse des Messerkopfes verschieden ist und die in Richtung der Längsachse gegeneinander versetzt sind, dadurch gekennzeichnet, daß drei kreisförmig ausgebildete Messerplatten (1, 2, 3) in einem Abstand von 120° am Umfang des Messerkopfes vorgesehen und in axialer Richtung so versetzt sind, daß die wirksamen, in eine Achsenebene projizierten Schneidkantenabschnitte der Messerplatten (1, 2, 3) stetig ineinander übergehen.

2. Aufbohrwerkzeug nach Anspruch 1, dadurch gekennzeichnet, daß die Messerplatten (1, 2, 3) drehbar gelagert sind.

3. Aufbohrwerkzeug nach einem der Ansprüche 1 oder 2, dadurch gekennzeichnet, daß den einzelnen, durch Kreisbogenabschnitte gebildeten Schneidkanten der Messerplatten (1, 2, 3) kreisbogenförmig gebogene Spanleitstufen zugeordnet sind.

**Revendications**

1. Outil à pointer pour la réalisation d'alésages de précision, comprenant une tête porte-lames sur la périphérie de laquelle sont disposées plusieurs lames qui, au moyen d'un dispositif de fixation, peuvent être pressées respectivement contre un épaulement de la tête porte-lames, qui se situent à des distances différentes de l'axe longitudinal de la tête porte-lames et présentent entre elles un décalage dans le sens de l'axe longitudinal, caractérisé en ce que trois lames (1, 2, 3) de forme circulaire sont prévues à une distance de 120° sur la périphérie de la tête porte-lames et qu'elles sont décalées dans le sens axial de telle façon que les sections de tranchant efficaces des lames (1, 2, 3) projetées dans un plan axial se raccordent sans discontinuité.

2. Outil à pointer selon la revendication 1, caractérisé en ce que les lames (1, 2, 3) sont montées de manière tournante.

3. Outil à pointer selon l'une des revendications 1 ou 2, caractérisé en ce que des échelons de guidage de copeaux courbés en arc de cercle sont associés aux différents tranchants des lames (1, 2, 3) constitués par des sections en arc de cercle.

**Claims**

1. Precision boring tool for making precision bored holes comprising a cutter head having arranged on its circumference several cutter bars, each being pressable by a securing device against a shoulder of said cutter head, the distance of said cutter bars from the longitudinal axis of said cutter head being different and said cutter bars being offset from one another in the direction of said longitudinal axis, characterised in that three cutter bars (1, 2, 3) of circular design are arranged at a spacing of 120 degrees on the circumference of said cutter head and are offset in the axial direction such that the effective cutting edge sections of said cutter bars (1, 2, 3) continually pass over into one another when projected onto a plane of the axis.

2. Boring tool according to claim 1, characterised in that said cutter bars (1, 2, 3) are rotatably mounted.

3. Boring tool according to one of claims 1 or 2, characterised in that chip-guiding steps curved in circular arc configuration are associated with the individual cutting edges of said cutter bars (1, 2, 3) which are formed by circular arc-shaped sections.

Fig. 1

Fig. 2